# EUROPEAN PATENT SPECIFICATION

(11) **EP 1 747 105 B1**
(45) Date of publication and mention of the grant of the patent: **28.10.2009**
(21) Application number: 05732224.0
(22) Date of filing: 19.04.2005
(51) Int. Cl.: B60D 1/62, H01R 35/02

(54) **A DEVICE FOR HOLDING TOGETHER FLEXIBLE CONDUCTORS**
VORRICHTUNG ZUM ZUSAMMENHALTEN VON FLEXIBLEN LEITERN
DISPOSITIF PERMETTANT DE MAINTENIR ENSEMBLE DES CONDUCTEURS FLEXIBLES

(30) Priority: 23.04.2004 SE 0401059
(43) Date of publication of application: 31.01.2007
(73) Proprietor: Desarollo AB, 721 36 Västeras (SE)
(72) Inventor: JOHNSSON, Mikael, S-735 32 Surahammar (SE)
(74) Representative: Reyier, Ann-Mari
(86) International application number: PCT/SE2005/000561
(87) International publication number: WO 2005/102744

(56) References cited:
- US-A- 4 624 472
- US-A- 4 846 697
- US-A- 5 909 861

## Description

### TECHNICAL FIELD

The invention relates to a device for holding together flexible conductors, such as cables, fluid conductors, hoses, optical fibers, cords, or the like, the device comprising a body adapted for holding together conductors extending between a first and a second unit. The inventions also relates to the use of such a device. The invention also relates to a contact member.

### BACKGROUND OF THE INVENTION AND PRIOR ART

When transferring electricity, electrical signals, pressurized gas, hydraulic fluid, or the like, different formes of elongated flexible conductors are used. Usually a separate conductor is used for each media to be transferred between two units. When there are several conductors it happens that the conductors become entangled with each other. In particular, this is a problem when the conductors extend between two units, which are movable or displaceable in relation to each other. In this case, the risk for entanglement increases, as well as the problems of entanglement, such as an increase of the mechanical wear of the conductors, but the conductors may also come off from the units, or a fluid conductor may for example be bent, such that the transfer of fluid is blocked. Entanglement of the conductors with each other also complicates connecting and disconnecting the conductors to the units.

Previously, this problem has been alleviated by using plastic bands tying the conductors together at certain points. However, there is still a risk that the conductors become entangled despite such plastic bands. The plastic bands also risk coming off on violent movements of the units, and it takes a long time to attach them onto the conductors.

One example, in which the problem with entangled conductors is particularly serious, is between a truck and a trailer. Several electrical conductors divided into three cables, and two air pressure conductors, extend between the truck and the trailer. The conductors for air pressure are coiled in order to increase their flexibility, which also increases the risk of entanglement between the conductors. This problem has been attacked for instance in the document WO 02/36416 which shows a device, in which the conductors are arranged inside the pivot joint connecting the truck and the trailer to each other. There are also a number of other constructions formed in order to solve this problem, which, for example, are shown in the documents DE 296 06 479, DE 19913911 and US 4, 183,599.

Generic US-A-4,624,472 discloses a coupling mechanism for coupling a plurality of fluid and electrical lines between adjacent coupled vehicles. The lines are grouped together to form a single elongated flexible group line. The group line prevents entanglement of the lines between the vehicles.

### SUMMARY OF THE INVENTION

The object of the present invention is to indicate a device reducing the problem with entanglement of the conductors arranged between two units, which are moveable or displaceable in relation to each other.

This object is achieved with a device as defined in claim 1.

The body is elongated and comprises a hollow space extending between a first and a second end of the body for receiving and holding together the conductors inside the hollow space, and that the body is flexible, such that the body is bendable on movement of the units in relation to each other.

By the body being flexible the resistance of the body decreases on movement between the units, which makes an elongated body possible. By the body being elongate the conductors and cables are held together along a longer distance than when using plastic bands according to the prior art, meaning that the conductors move less in relation to each other, decreasing the risk for entanglement. Preferably the body is shaped to hold together the conductors at least along a main part of the length of the conductors. Thus the risk for entanglement decreases further. By the body being elongate the risk for the body to come off from the conductors decreases as well, and it also takes less time to attach the device to the conductors, since it is sufficient with one body. Preferably the mantle surface of the body is substantially covering, that is being devoid of holes. Consequently the body also protects the conductors from external influences, such as wind and weather, harmful UV-light and dirt. Furthermore, the body rends stability to the conductors, so that the risk for folding of the conductors decreases. This is otherwise a problem with fluid conductors, in that the conductor becomes weakened when it is folded, which may lead to that the conductor breaks due to the high pressure inside the fluid conductor. Preferably the body is shaped for holding together conductors in a weak spiral inside the body. This decreases the risk that the conductors are torn apart due to tensional forces. Furthermore the stiffness of the device increases, which decreases the risk for folding of the body and of the conductors inside the body.

The device comprises a sealing member arranged to seal off the opening substantially tightly around the conductors. Thus, displacement of the conductors through the opening is counteracted, which also decreases the displacement of the conductors inside the body. Furthermore it counteracts dirt from penetrating into the body through the openings.

According to one embodiment of the invention the device is adapted to receive and hold together at least one electrical conductor and at least one fluid conductor extending between a first vehicle unit and a second vehicle unit. Conductors arranged between two vehicle units are subject for severe stress both in respect of movements and dirt. The device according to the invention solves this in a very efficient way in this embodiment.

Preferably the device is adapted to hold together electrical conductors and fluid conductors between a truck and an associated trailer. The invention is particularly suitable for this embodiment since there are as many as five separate conductors and cables between the vehicles. Advantageously the device is adapted to the application by adapting the length of the body and the diameter of the hollow space. Preferably the two coiled fluid conductors are switched for two straight fluid conductors, meaning that the inner diameter of the body can be decreased. Preferably the diameter is small such that the conductors are pressed against each other inside the body. Preferably the device is shaped such that the body is somewhat shorter than the length of the conductors, such that the body avoids direct connection to the units. Preferably the body holds together at least two cables or cords, the cables or cords each in turn comprising several wires encased by a cover.

At least one of the ends of the body is provided with an opening shaped for insertion or withdrawal of the conductors into or out of the body. Consequently it is easy to attach the device to the conductors, and to change the number of conductors at need simply by pulling the conductors through the body. Preferably, with that the body is shaped tubular.

According to a further embodiment the mantle surface of the body comprises an openable slit extending to the hollow space in order to facilitate insertion and withdrawal of the conductors inside the body. If the body is very long it may be difficult to insert the conductors into the body via the ends. With a slit the mounting is facilitated since it is possible to pull or push the conductors via the slit. The slit is preferably arranged in the middle of the body. The mantle surface of the body may also comprise several such openable slits. Preferably the slit extends along at least a main part of the length of the body.

According to one embodiment the slit extends along the entire length of the body and the body is able to be folded out. Consequently the conductors do not need to be pulled inside the body but may be laid down inside the body. Thus the risk for entanglement of the conductors is decreased during the insertion and the withdrawal of the conductors as well.

According to a further embodiment the inner wall of the hollow space is provided with projections and/or depressions, such as stubs or grooves, for receiving and clamping the conductors against the inner wall. Thus the conductors are fixed inside the body, which further decreases the risk for entanglement of the conductors with each other. Preferably said stubs or grooves are arranged weakly turned around the length axes of the body in a weakly helical shape.

According to a further embodiment the device comprises an indicator of wear arranged to facilitate judgment of the wear of the device. Thus a user of the device may see more easily when it is time for maintenance, for example in order to change the device or a conductor. This is especially important for example when dangerous substances, such as flammable or explosives substances are conducted through a conductor, or for high voltage conductors.

According to a preferred embodiment the indicator of wear comprises a thin, electrically conducting wire arranged inside the material of the body, wherein a break on the wire indicates wear of the body. Such a break may for example arise during bending of the body or for repeated and substantial changes of the temperature of the body. The wire thus facilitates judgment of the wear from fatigue.

According to a further preferred embodiment of the invention the indicator of wear comprises a first, externally arranged layer of material and a second, internally arranged layer of material of the body, wherein the first layer is colored in a first color and the second layer is colored in a second contrasting color. Such an indicator of wear facilitates inspection of cracks or cutting damages in the body. When a crack has been formed in the body the second layer is clearly visible through the crack in the first layer, which facilitates detection of the crack. This is advantageous for example during conduction of a pressurized gas, wherein leaks easily may be discovered. Such an indicator of wear also facilitates judgment of the mechanical wear of the body, in that the bottom layer becomes visible when the first layer has been weared off.

According to a further embodiment the device comprises at least two contact members arranged in connection with one end of the body, wherein each of the contact members is arranged to connect at least one of said conductors to said units. This is advantageous if, for example, the original contacts of a unit are located at a distance from each other. Thus the device may be used for existing units without the need to adapt, or to reconstruct the units after the device. Of course, more than two contact members may be arranged in connection with the same end, and the contact members may connect more than one conductor.

According to a further embodiment the device comprises a contact member arranged in connection with one end of the body, and being arranged for connecting the main part of said conductors to one of said units. Thus a faster connection of the device and the conductors to the first and the second unit respectively is allowed during connection. Furthermore the cost for manufacturing the device decreases, since the device comprises a smaller number of contact members for several conductors.

Preferably the contact member is arranged to connect all conductors passing through the body.

According to a further embodiment the device comprises a contact member for connecting at least one of said conductors to the first or the second unit, wherein the contact member comprises a light-emitting member arranged to illuminate the area in front of the contact member. Thus, connection of the contact member to the first or second unit is facilitated when it is dark or when the contact is situated on a location, which is dark and difficult to access. Preferably the light-emitting member is a light-emitting diode or an ordinary lamp.

According to a further embodiment of the invention the device comprises a contact member arranged for connecting at least one of said conductors to one of said units, wherein the contact member comprises a connection indicator arranged to emit a signal on an established connection between the units through the conductor. Thus the user connecting the contact member to the first or the second unit receives a confirmation that a secure connection has been established. Thus the security increases for the user, and the risk for leakage or disruption of signals decreases. The connection indicator may for example comprise a current meter, or a pressure sensor, and a control lamp being lighted upon measuring correct values in the sensors.

According to a further embodiment of the invention the device comprises at least one fluid conductor intended for conducting a pressurized gas, and at least one pressure sensor arranged to sense a gas pressure, and that the device is arranged to emit a warning signal on detection of leakage of gas from the fluid conductor. Thus the user is notified that the fluid conductor or, alternatively, the device, needs to be changed or repaired.

The object of the invention is further achieved with a use of a device according to claim 1, being **characterized in that** the device is used to hold together conductors between a first and a second unit. Thus the advantages mentioned in connection with the device are achieved. The device used may also be shaped in accordance to any of the features mentioned in connection with the device. Preferably the device is used to hold together conductors extending between a first and a second vehicle unit. Preferably said vehicle units are a truck and an associated trailer respectively.

### SHORT DESCRIPTION OF ATTACHED DRAWINGS

The invention is now to be described by means of a number of non-limiting examples of the invention, and with reference to the attached drawings.
- Fig.1: shows a device according to the invention.
- Fig.2: shows a device according to the invention holding to- gether conductors between a truck and a trailer.
- Fig.3a-b: shows a device able to be folded out according to the invention.
- Fig.4: shows a section of a device according to the invention provided with indicators of wear.
- Fig.5: shows a device according to the invention comprising a contact member.

### DETAILED DESCRIPTION OF PREFERRED EMBODIMENTS

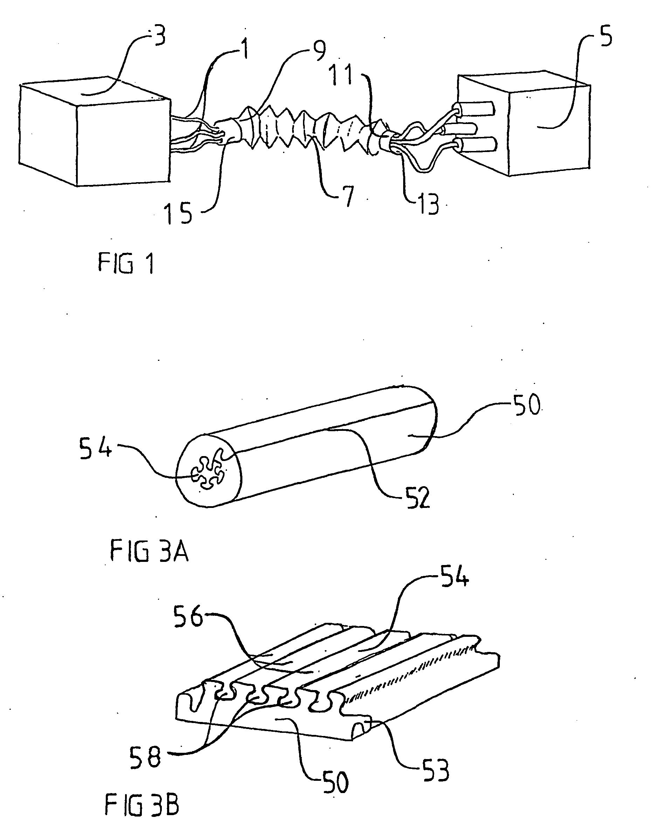

In fig.1 flexible conductors 1 extending between a first unit 3 and a second unit 5 are shown. The first unit 3 and the second unit 5 are movable and displaceable in relation to each other. The device according to the invention comprises an elongated flexible body 7 comprising a hollow space 13 extending between a first 9 and a second end 11 of the body 7 for receiving and holding together the conductors 1 inside the hollow space 13.

In this example the first 9 and second ends 11 of the body 7 each comprises one opening shaped partly for receiving the conductors 1, such that the conductors may pass into and out of the body 7 for connection to the first 3 and the second unit 5, and partly shaped for allowing insertion and withdrawal of the conductors into and out of the body 7 for mounting the device onto the conductors 1. The body 7 is thus substantially tubular.

The device in fig. 1 also comprises a sealing member 15 arranged to seal the opening of the first end 9. In this example, the sealing member 15 is constituted by a separate sealing member 15 covering the opening. The sealing member 15 is shaped as a sleeve provided with openings for the conductors. The sealing member 15 is thus mounted after that the conductors 1 have been inserted into the body 7. The sealing member 15 then also prevents dirt from entering through the opening of the first end 9.

The sealing member may also be shaped in many different ways. For example, the sealing member may comprise a ring shaped member slipped over the end 9 and clamping the opening shut. In another example the sealing member may comprise an elastic portion of the body, wherein the opening may be closed by changing the shape of the elastic portion. The sealing member may also comprise a tightening material around the edge of the opening, wherein the opening is adapted to the outer diameter of the conductor, such that a tight connection between the opening and the conductor is obtained.

In this example the body 7 is manufactured in a flexible polymer material. The outside of the body 7 is pleated in order to make the body 7 even more flexible. The material is adapted to the demands on flexibility of the body 7 in a current application. The material is further adapted, such that the material is sufficiently stiff to prevent a too large bending of the body 7 in order to protect the conductors 1 inside the body 7. The body 7 further comprises a second, soft material arranged inside the hollow space 13. The soft material further encases and protects the conductors 1. The soft material in this example comprises plastic foam.

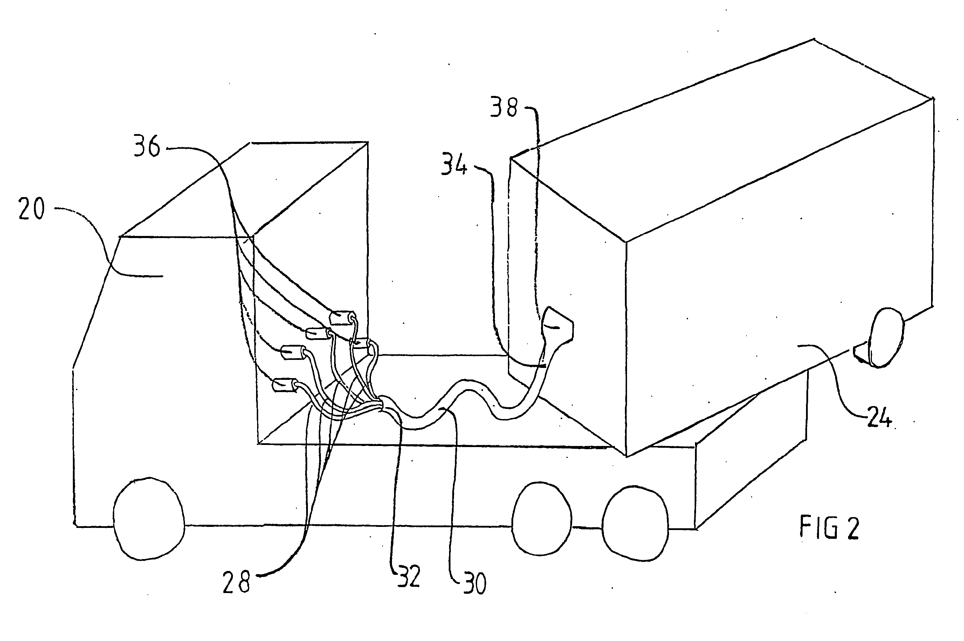

In fig. 2 a first vehicle unit in the form of a truck 20, a second vehicle unit in the form of a trailer 24 associated with the truck, and five conductors 28, namely three electrical cables and two conductors of pressurized air, are shown. The conductors 28 thus transfer electrical power and pressurized air from the truck to the trailer 24 in order for the trailer 24 to be able to perform the desired functions. For trucks and trailers according to the prior art these five conductors 28 are separate from each other and large problems have arisen with entanglement of the conductors 28 with each other.

The device according to the invention comprises in this example an elongated, flexible body 30 with a first 32 and a second end 34. The body 30 comprises a hollow space running through the body 30 between the ends 32, 34 for receiving and holding together the conductors 28. The device is further adapted to the application by the length of the body 30 and the diameter of the hollow space being adapted to the length and thicknesses of the conductors 28. The body 30 thus extends at least along a main part of the length of the conductors 28. Furthermore the diameter of the hollow space is adapted, such that the body 30 presses the conductors 28 against each other.

In this example the fluid conductors are straight and the body is adapted for holding together straight conductors. According to the prior art the fluid conductors were usually coiled in order to allow better flexibility. It has now been shown that by using the device according to the invention it is both possible and advantageous to use straight conductors.

The length of the body 30 is in this example somewhat shorter than the length of the conductors 28. The five conductors 28 thus extend a distance outside the first end 32 of the body 30. The device further comprises a set of five contact members 36, wherein each conductor 28 is provided with its own contact member 36. Thus the conductors 28 may each be connected to a separate contact point in the truck, the contact points being arranged on a distance from each other. For ordinary trucks 20 the contact points for the conductors 28 are usually located at a distance from each other, wherein the device, by the embodiment above, may be used for existing truck systems without having to reconstruct the truck 20. The conductors 28 are in this example molded into the first end 32 of the body, wherein the conductors 28 and the body 30 form a unit such that the conductors 28 and the body cannot be displaced in relation to each other. In another example the body may instead be provided with a sealing member at its first end, as described in connection with fig.1.

The device further comprises a contact member 38 arranged in connection with the second end 34 of the body 30 and arranged to connect all conductors 28 to the trailer 24. The contact member 38 is thus a multi-contact member, connecting both the electrical conductors and the fluid conductors. The truck 24 is thus adapted to the contact member 38 of the device, such that the truck 24 and the contact member 38 fit together. This gives the advantage that the conductors 28 are held together inside the body 30 substantially the entire way to the truck 24, protecting the conductors 28 for a longer distance, and that the risk for entanglement decreases further. In this example the contact member 38 seals the second end 34 of the body 30.

In another embodiment both ends of the body may of course be provided with a set of contact members, wherein neither the truck nor the trailer needs to be adapted to the device. Alternatively the device may comprise two contact members arranged at each end of the body, and which both are connecting all conductors. Furthermore the device may be hanged on a hook or similar in order to relieve the body from tensional forces.

In fig. 3 a further example of a device according to the invention is shown. The device comprises an elongated, flexible body 50 shaped for holding together conductors in a hollow space inside the body 50. The body 50 is provided with an openable slit 52 extending to the hollow space in order to facilitate insertion and withdrawal of the conductors inside the body 50. The body 50 is further shaped such that the slit 52 is sealable. The body comprises, for this purpose, sealing elements 53, which are shaped for hooking into each other. In an alternative embodiment the device may instead comprise separate sealing elements for sealing the slit, such as tapes, rings and straps, which are strapped around the outside of the body 50.

The slit 52 is in this example extending along the entire length of the body. The body 50 is thus able to be folded out, which is shown in fig. 3b. Thus, it is easy to put in and take out, the conductors from the body 50. Thus it is easy to, for example, change a conductor that is broken. In another example the slit may instead extend only along a shorter part of the length of the body. Preferably the slit is in this case arranged centered in the middle of the body. Alternatively the body may comprise several such slits. A user may, for example, grip the conductors through the slit in order to for example pull the conductors into the body.

In this example, the body 50 has an inner wall 54 provided with projections 56 and depressions 58. In this example, the projections 56 are constituted by stubs, and the depressions 58 are constituted by grooves. These stubs 56 and grooves 58 are shaped for receiving and clamping the conductors against the inner wall 54 of the body 50. The conductors are thus possible to squeeze down into the depressions 58, wherein the conductors are fixed inside the body 50 as well. The conductors are also withdrawable from the depressions 58, wherein the conductors easily may be changed. In this example the projections 56 and the depressions 58, respectively, are weakly turned around the length axes of the body 50. Thus, any tensional forces in the conductors, obtained during movements between the units, are decreased.

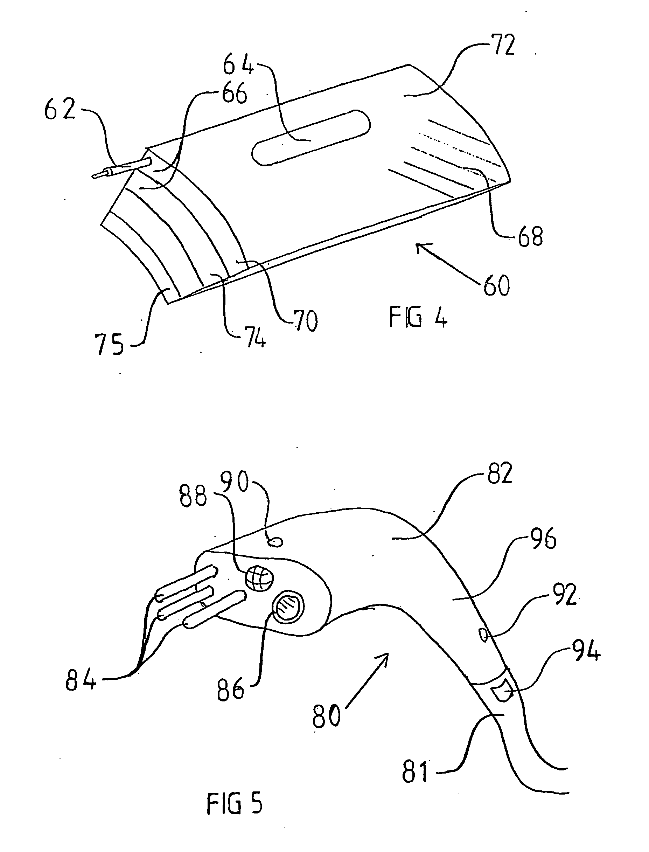

In fig. 4 a section of a wall of an elongated, flexible body 60 according to the invention is shown, shaped for holding together conductors inside a hollow space inside the body 60. The body 60 is provided with a plurality of different indicators of wear 62, 64, 66, 68.

The first indicator of wear 62 comprises a thin, electrically conducting wire 62 arranged inside the material of the body 60. The indicator of wear further comprises a measuring device (not shown) measuring the resistance of the wire 62. If the wire 62 breaks the resistance rises dramatically, which the measuring device detects, after which a signal is emitted. A break on the wire 62 may occur if the body has been bent forward and backwards a very large number of times. A break on the wire then indicates wear from fatigue of the body. A break on the wire may also occur if a cutting damage has occurred, which has cut the wire.

The second indicator of wear 64 comprises a transparent portion 64 of the body 60. Thus a user may inspect the quality of the conductors arranged inside the body 60, by visually inspecting their wear through the transparent portion 64. Such an indicator of wear thus facilitates the control of the wear of the conductors and the need for maintenance. The transparent portion advantageously covers the main part of the mantel surface of the body.

The third indicator of wear 66 comprises a first, externally arranged layer of material 70 of the body 60. In this example the first layer of material 70 is arranged in connection with the mantel surface 72 of the body 60, but in another example the first layer of material 70 may be situated a distance below the mantel surface 72 of the body 60. Furthermore the third indicator of wear comprises a second layer of material 74 situated inside the first layer 70. The first layer 70 is colored in a first color and the second layer 74 is colored in a second contrasting color. Thus a user may easily discover cracks in the first layer of material 70, since the contrasting color of the second layer 74 is easily visible through such a crack or damage. Furthermore the second layer 74 becomes visible if the first layer 70 has been weared off, which indicates that the device needs to be changed. The device also comprises a layer with fiber cloth 75 in order to reinforce the body 60 and decrease damages from tensional forces.

The fourth indicator of wear 68 comprises printing ink 68 printed in a pattern across the mantel surface 72 of the body. In this example the pattern is regular. A user may thus easily discover deviations in the pattern, which have arisen, for example, by wear or cutting damages, since the pattern then is experienced as irregular. Thus the judgment of external, mechanical wear of the body is facilitated. This is especially suitable in very demanding applications in which very high quality is necessary and in which no wear may be accepted. Such a printing ink may also facilitate inspection of manufacturing errors of the body, wherein for example a difference in the outer diameter of the body may lead to an irregularity of the pattern of the body.

In fig. 5 a device 80 is shown comprising a body 81 and a contact member 82. The contact member 82 is in this example shaped for connecting all conductors held together by the device 80. The contact member may in another example connect only one conductor. The contact member 82 is further shaped with an ergonomic grip 96 to facilitate holding and connection of the contact member 82. In this example the grip 96 is a pistol grip.

The contact member 82 is further shaped to connect conductors of different types. The contact member 82 thus comprises a first connecting member 84, in this example in the form of three electrically conducting pins for connecting electrical conductors. The contact member 82 further comprises a second connecting member 86 in the form of a rubber encased hollow space for reception of a fluid-conducting nozzle. The contact member 82 is thus arranged to both connect electrical systems and fluid conducting systems.

The contact member 82 further comprises a lamp 88 arranged to illuminate the area in front of the contact member 82. The lamp 88 thus illuminates a corresponding second, complementing contact member of one of said units, to which the contact member 88 is to be connected. This is advantageous for example during the night or when the second contact member is situated in a narrow, dark space. The lamp 88 is in this example lighted through a pressure on a button, but the lamp may also be lighted automatically in dependent on desired criteria.

The contact member further comprises a connection indicator 90 arranged to emit a signal upon established connection between the units via the conductor. In this example the connection indicator 90 is a control lamp 90, arranged to become lighted when in a narrow, dark space. The lamp 88 is in this example lighted through a pressure on a button, but the lamp may also be lighted automatically in dependent on desired criteria.

The contact member further comprises a connection indicator 90 arranged to emit a signal upon established connection between the units via the conductor. In this example the connection indicator 90 is a control lamp 90, arranged to become lighted when the conductors are connected between the units. The user thus receives a confirmation that a connection has been established. An established connection may be detected by for example measuring the resistance or current of an electrical conductor or the pressure of a fluid conductor. Such sensors may be arranged both in connection with the two units and with the device itself.

The contact member further comprises an indicator of wear 92 comprising a lamp 92 and a pressure guard 94. The pressure guard 94 is in this example arranged inside the hollow space of the body 81 for measuring the pressure inside the body 81. During leakage of a fluid conductor the pressure guard 94 registers an increase in pressure, and emits a signal to the indicator of wear 92, wherein the lamp 92 is lighted. Preferably the body 81 is thus tightly sealed, for example at the ends of the body, such that the hollow space in the body 81 constitutes a tightly sealed chamber. Preferably the device also comprises a processor for controlling control lamps and the pressure guard.

The invention is not limited to the embodiments shown herein but may be varied within the framework of the following claims. The device need not be used in connection with vehicles only but may also be used for example between robot links or between portable units.

## Claims

1. A device (80) for holding together flexible conductors (1; 28), such as cables, fluid conductors, hoses, optical fibers, cords or the like, the device (80) comprising a body (7; 30; 50; 60; 81) adapted for holding together conductors (1; 28) extending between a first (3) and a second unit (5), wherein the body (7; 30; 50; 60; 81) is elongated and comprises a hollow space (13) extending between a first (9; 32) and a second end (11; 34) of the body (7; 30; 50; 60; 81) for receiving and holding together the conductors (1; 28) in the hollow space (13), and that the body (7; 30; 50; 60; 81) is flexible, such that the body (7; 30; 50; 60; 81) is bendable on movement of the units (5, 9) in relation to each other, **characterized in that** at least one of the ends of the body (7; 30; 50; 60; 81) is provided with an opening shaped for insertion or withdrawal of the conductors (1; 28) into and out of the body (7; 30; 50; 60; 81), and that the device (80) comprises a sealing member (15) arranged to seal the opening substantially tightly around the conductors (1; 28).

2. A device (80) according to claim 1, **characterized in that** the device (80) is adapted to receive and hold together at least one electrical conductor and at least one fluid conductor extending between a first vehicle unit (20) and a second vehicle unit (24).

3. A device (80) according to any of the previous claims, **characterized in that** the mantle surface (72) of the body (7; 30; 50; 60; 81) comprises an openable slit (52) extending to the hollow space (13) to facilitate insertion and withdrawal of the conductors (1; 28) inside the body (7; 30; 50; 60; 81).

4. A device (80) according to claim 3, **characterized in that** the slit (52) extends along at least the main part of the length of the body (7; 30; 50; 60; 81).

5. A device (80) according to claim 3 or 4, **characterized in that** the slit (52) extends along the entire length of the body (7; 30; 50; 60; 81) and that the body (7; 30; 50; 60; 81) is able to be folded out.

6. A device (80) according to any of the previous claims, **characterized in that** the inner wall (54) of the hollow space (13) is provided with projections (56) and/or depressions (58), such as stubs or groves for receiving and clamping the conductors (1; 28) against the inner wall (54).

7. A device (80) according to any of the previous claims, **characterized in that** the device (80) comprises an indicator of wear (62; 64; 66; 68) arranged to facilitate judgment of the wear of the device (80).

8. A device (80) according to claim 7, **characterized in that** the indicator of wear (62; 64; 66; 68) comprises a thin, electrically conducting wire arranged inside the material of the body (7; 30; 50; 60; 81), wherein a break on the wire indicates wear of the body (7; 30; 50; 60; 81).

9. A device (80) according to claim 7, **characterized in that** the indicator of wear (62; 64; 66; 68) comprises a first, externally arranged layer of material (70) of the body (7; 30; 50; 60; 81), and a second, internally arranged layer of material (74) of the body (7; 30; 50; 60; 81), wherein the first layer (70) is colored in a first color and the second layer (74) is colored in a second contrasting color.

10. A device (80) according to any of the previous claims, **characterized in that** the device (80) comprises at least a first and a second contact member (36; 38; 82) arranged in connection with one end of the body (7; 30; 50; 60; 81), wherein each of the contact members (36; 38; 82) is arranged to connect one of said conductors (1; 28) to the first (3) or second unit (5).

11. A device (80) according to any of the claims 1-9, **characterized in that** the device (80) comprises a contact member (36; 38; 82) arranged in connection with one end of the body (7; 30; 50; 60; 81) and being arranged for connecting the main part of said conductors (1; 28) to the first (3) or second unit (5).

12. A device (80) according to any of the previous claims, **characterized in that** the device (80) comprises a contact member (36; 38; 82) for connecting at least one of said conductors (1; 28) to the first (3) or second unit (5), wherein the contact member (36; 38; 82) comprises a light-emitting member arranged to illuminate the area in front of the contact member (36; 38; 82).

13. A device (80) according to any of the previous claims, **characterized in that** the device (80) comprises a contact member (36; 38; 82) shaped for connection of at least one of said conductors (1; 28) to the first (3) or second unit (5), wherein the contact member (36; 38; 82) comprises a connection indicator (90) arranged to emit a signal upon established connection between the units (3, 5) via the conductor (1; 28).

14. A device (80) according to any of the previous claims, **characterized in that** the device (80) comprises at least one fluid conductor intended to conduct a pressurized gas and at least one pressure sensor arranged to sense a gas pressure, and that the device (80) is arranged to emit a warning signal upon detection of leakage of gas from the fluid conductor.

15. A use of the device (80) according to claim 1, **characterized in that** the device (80) is used for holding together conductors (1; 28) between a first (3) and a second unit (5).

16. A use according to claim 15, **characterized in that** said first and second units (3, 5) are vehicle units.

## Patentansprüche

1. Vorrichtung (80) zum Zusammenhalten flexibler Leiter (1; 28), beispielsweise Kabel, Fluidverbinder, Schläuche, optische Fasern, Schnüre oder dergleichen, wobei die Vorrichtung (80) einen Körper (7; 30; 50; 60; 81) aufweist, der zum Zusammenhalten der sich zwischen einer ersten (3) und einer zweiten Einheit (5) erstreckenden Leiter (1; 28) ausgebildet ist, wobei der Körper (7; 30; 50; 60; 81) länglich ist und einen Hohlraum (13) aufweist, der sich zwischen einem ersten (9; 32) und einem zweiten Ende (11; 34) des Körpers (7; 30; 50; 60; 81) zum Aufnehmen und Zusammenhalten der Leiter (1; 28) im Hohleraum (13) erstreckt, und wobei der Körper (7; 30; 50; 60; 81) flexibel ist, so dass der Körper (7; 30; 50; 60; 81) bei einer Bewegung der Einheiten (5, 9) zueinander biegbar ist,
**dadurch gekennzeichnet, dass** zumindest eines der Enden des Körpers (7; 30; 50; 60; 81) mit einer Öffnung versehen ist, die zum Einführen oder Herausnehmen der Leiter (1; 28) in den und aus dem Körper (7; 30; 50; 60; 81) geformt ist, und dass die Vorrichtung (80) ein Dichtelement (15) aufweist, das zum Dichten der Öffnung im Wesentlichen fest um die Leiter (1; 28) herum angeordnet ist.

2. Vorrichtung (80) nach Anspruch 1,
**dadurch gekennzeichnet, dass** die Vorrichtung (80) dazu ausgebildet ist, zumindest einen elektrischen Leiter und zumindest einen Fluidleiter aufzunehmen und zusammenzuhalten, die sich zwischen einer ersten Fahrzeugeinheit (20) und einer zweiten Fahrzeugeinheit (24) erstrecken.

3. Vorrichtung (80) nach einem der vorangegangenen Ansprüche,
**dadurch gekennzeichnet, dass** die Manteloberfläche (72) des Körpers (7; 30; 50; 60; 81) einen öffenbaren Schlitz (52) aufweist, der sich zum Hohlraum (13) erstreckt, um das Einführen und Entfernern der Leiter (1; 28) im Körper (7; 30; 50; 60; 81) zu erleichtern.

4. Vorrichtung (80) nach Anspruch 3,
**dadurch gekennzeichnet, dass** sich der Schlitz (52) zumindest entlang des Hauptteils der Länge des Körpers (7; 30; 50; 60; 81) erstreckt.

5. Vorrichtung (80) nach Anspruch 3 oder 4,
**dadurch gekennzeichnet, dass** sich der Schlitz (52) entlang der Gesamtlänge des Körpers (7; 30; 50; 60; 81) erstreckt und dass der Körper (7; 30; 50; 60; 81) herausfaltbar ist.

6. Vorrichtung (80) nach einem der vorangegangenen Ansprüche,
**dadurch gekennzeichnet, dass** die Innenwand (54) des Hohlraumes (13) mit Vorsprüngen (56) und/oder Vertiefungen (58), beispielsweise Stümpfen oder Nuten, zum Aufnehmen und Klemmen der Leiter (1; 28) gegen die Innenwand (54) versehen ist.

7. Vorrichtung (80) nach einem der vorangegangenen Ansprüche,
**dadurch gekennzeichnet, dass** die Vorrichtung (80) eine Verschleißanzeige (62; 64; 66; 68) aufweist, die so angeordnet ist, dass sie das Beurteilen des Verschleißes der Vorrichtung (80) erleichtert.

8. Vorrichtung (80) nach Anspruch 7,
**dadurch gekennzeichnet, dass** die Verschleißanzeige (62; 64; 66; 68) einen dünnen, elektrisch leitenden Draht aufweist, der im Material des Körpers (7; 30; 50; 60; 81) angeordnet ist, wobei ein Bruch des Drahtes einen Verschleiß des Körpers (7; 30; 50; 60; 81) anzeigt.

9. Vorrichtung (80) nach Anspruch 7,
**dadurch gekennzeichnet, dass** die Verschleißanzeige (62; 64; 66; 68) eine erste, außen angeordnete Schicht aus dem Material (70) des Körpers (7; 30; 50; 60; 81) und eine zweite, innen angeordnete Schicht aus dem Material (74) des Körpers (7; 30; 50; 60; 81) aufweist, wobei die erste Schicht (70) mit einer ersten Farbe und die zweite Schicht (74) mit einer zweiten, einen Kontrast bildenden Farbe gefärbt ist.

10. Vorrichtung (80) nach einem der vorangegangenen Ansprüche,
**dadurch gekennzeichnet, dass** die Vorrichtung (80) zumindest ein erstes und ein zweites Kontaktelement (36; 38; 82) aufweist, die in Verbindung mit einem Ende des Körpers (7; 30; 50; 60; 81) angeordnet sind, wobei jedes der Kontaktelemente (36; 38; 82) so angeordnet ist, dass es einen der Leiter (1; 28) mit der ersten (3) oder der zweiten Einheit (5) verbindet.

11. Vorrichtung (80) nach einem der Ansprüche 1 bis 9,
**dadurch gekennzeichnet, dass** die Vorrichtung (80) ein Kontaktelement (36; 38; 82) aufweist, das in Verbindung mit einem Ende des Körpers (7; 30; 50; 60; 81) angeordnet ist und zum Verbinden des Hauptteils der Leiter (1; 28) mit der ersten (3) oder der zweiten Einheit (5) angeordnet ist.

12. Vorrichtung (80) nach einem der vorangegangenen Ansprüche,
**dadurch gekennzeichnet, dass** die Vorrichtung (80) ein Kontaktelement (36; 38; 82) zum Verbinden zumindest eines der Leiter (1; 28) mit der ersten (3) oder der zweiten Einheit (5) aufweist, wobei das Kontaktelement (36; 38; 82) ein lichtemittierendes Element aufweist, das zum Beleuchten eines Bereichs vor dem Kontaktelement (36; 38; 82) angeordnet ist.

13. Vorrichtung (80) nach einem der vorangegangenen Ansprüche,
**dadurch gekennzeichnet, dass** die Vorrichtung (80) ein Kontaktelement (36; 38; 82) aufweist, das zum Verbinden von zumindest einem der Leiter (1; 28) mit der ersten (3) oder der zweiten Einheit (5) geformt ist, wobei das Kontaktelement (36; 38; 82) eine Verbindungsanzeige (90) aufweist, die so angeordnet ist, dass sie ein Signal beim Aufbauen der Verbindung zwischen den Einheiten (3, 5) über den Leiter (1; 28) abgibt.

14. Vorrichtung (80) nach einem der vorangegangenen Ansprüche,
**dadurch gekennzeichnet, dass** die Vorrichtung (80) zumindest einen Fluidleiter, der dazu vorgesehen ist, ein unter Druck gesetztes Gas zu leiten, und zumindest einen Drucksensor aufweist, der zum Erfassen eines Gasdrucks angeordnet ist, und dass die Vorrichtung (80) dazu ausgelegt ist, ein Warnsignal beim Detektieren einer Leckage von Gas aus dem Fluidleiter abzugeben.

15. Verwendung der Vorrichtung (80) nach Anspruch 1,
**dadurch gekennzeichnet, dass** die Vorrichtung (80) zum Zusammenhalten von Leitern (1; 28) zwischen einer ersten (3) und einer zweiten Einheit (5) verwendet wird.

16. Verwendung nach Anspruch 15,
**dadurch gekennzeichnet, dass** die erste und die zweite Einheit (3, 5) Fahrzeugeinheiten sind.

## Revendications

1. Dispositif (80) pour maintenir ensemble des conducteurs souples (1 ; 28), tels que des câbles, des conducteurs de fluide, des tuyaux, des fibres optiques, des cordons ou similaire, le dispositif (80) comprenant un corps (7 ; 30 ; 50 ; 60 ; 81) adapté pour maintenir ensemble des conducteurs (1 ; 28) s'étendant entre une première (3) et une deuxième (5) unité, dans lequel le corps (7 ; 30 ; 50 ; 60 ; 81) est allongé et comprend un espace creux (13) s'étendant entre une première (9 ; 32) et une deuxième (11 ; 34) extrémité du corps (7 ; 30 ; 50 ; 60 ; 81) pour recevoir et maintenir ensemble les conducteurs (1 ; 28) dans l'espace creux (13), et dans lequel le corps (7 ; 30 ; 50 ; 60 ; 81) est souple, de sorte que le corps (7 ; 30 ; 50 ; 60 ; 81) peut être plié lors du déplacement des unités (5, 9) les unes par rapport aux autres, **caractérisé en ce qu'**au moins l'une des extrémités du corps (7 ; 30 ; 50 ; 60 ; 81) est pourvue d'une ouverture formée pour une insertion ou un retrait des conducteurs (1 ; 28) dans et hors du corps (7 ; 30 ; 50 ; 60 ; 81), et **en ce que** le dispositif (80) comprend un élément d'étanchéité (15) agencé pour fermer hermétiquement l'ouverture sensiblement étroitement autour des conducteurs (1 ; 28).

2. Dispositif (80) selon la revendication 1, **caractérisé en ce que** le dispositif (80) est adapté pour recevoir et maintenir ensemble au moins un conducteur électrique et au moins un conducteur de fluide s'étendant entre une première unité de véhicule (20) et une deuxième unité de véhicule (24).

3. Dispositif (80) selon l'une quelconque des revendications précédentes, **caractérisé en ce que** la surface d'enveloppe extérieure (72) du corps (7 ; 30 ; 50 ; 60 ; 81) comprend une fente (52) ouvrable s'étendant vers l'espace creux (13) pour faciliter l'insertion et le retrait des conducteurs (1 ; 28) à l'intérieur du corps (7 ; 30 ; 50 ; 60 ; 81).

4. Dispositif (80) selon la revendication 3, **caractérisé en ce que** la fente (52) s'étend au moins le long de la partie principale de la longueur du corps (7; 30; 50; 60; 81).

5. Dispositif (80) selon la revendication 3 ou 4, **caractérisé en ce que** la fente (52) s'étend le long de la longueur entière du corps (7 ; 30 ; 50 ; 60 ; 81), et **en ce que** le corps (7 ; 30 ; 50 ; 60 ; 81) peut être replié.

6. Dispositif (80) selon l'une quelconque des revendications précédentes, **caractérisé en ce que** la paroi intérieure (54) de l'espace creux (13) est pourvue de protubérances (56) et/ou de renfoncements (58), tels que des tronçons ou des sillons, pour recevoir et serrer les conducteurs (1 ; 28) contre la paroi intérieure (54).

7. Dispositif (80) selon l'une quelconque des revendications précédentes, **caractérisé en ce que** le dispositif (80) comprend un indicateur d'usure (62 ; 64 ; 66 ; 68) agencé pour faciliter le jugement de l'usure du dispositif (80).

8. Dispositif (80) selon la revendication 7, **caractérisé en ce que** l'indicateur d'usure (62 ; 64 ; 66 ; 68) comprend un mince câble électriquement conducteur agencé à l'intérieur du matériau du corps (7 ; 30 ; 50 ; 60 ; 81), dans lequel une rupture du câble indique l'usure du corps (7 ; 30 ; 50 ; 60 ; 81).

9. Dispositif (80) selon la revendication 7, **caractérisé en ce que** l'indicateur d'usure (62 ; 64 ; 66 ; 68) comprend une première couche de matériau (70) agencée à l'extérieur du corps (7 ; 30 ; 50 ; 60 ; 81), et une deuxième couche de matériau (74) agencée à l'intérieur du corps (7 ; 30 ; 50 ; 60 ; 81), dans lequel la première couche (70) est colorée en une première couleur et la deuxième couche (74) est colorée en une deuxième couleur contrastante.

10. Dispositif (80) selon l'une quelconque des revendications précédentes, **caractérisé en ce que** le dispositif (80) comprend au moins des premier et deuxième éléments de contact (36 ; 38 ; 82) agencés en relation avec une extrémité du corps (7 ; 30 ; 50 ; 60 ; 81), dans lequel chacun des éléments de contact (36 ; 38 ; 82) est agencé pour connecter l'un desdits conducteurs (1 ; 28) à la première (3) ou à la deuxième (5) unité.

11. Dispositif (80) selon l'une quelconque des revendications 1 à 9, **caractérisé en ce que** le dispositif (80) comprend un élément de contact (36 ; 38 ; 82) agencé en relation avec une extrémité du corps (7 ; 30 ; 50 ; 60 ; 81) et agencé pour connecter la partie principale desdits conducteurs (1 ; 28) à la première (3) ou à la deuxième (5) unité.

12. Dispositif (80) selon l'une quelconque des revendications précédentes, **caractérisé en ce que** le dispositif (80) comprend un élément de contact (36 ; 38 ; 82) pour connecter au moins l'un desdits conducteurs (1 ; 28) à la première (3) ou à la deuxième (5) unité, dans lequel l'élément de contact (36 ; 38 ; 82) comprend un élément émettant de la lumière agencé pour éclairer la zone à l'avant de l'élément de contact (36 ; 38 ; 82).

13. Dispositif (80) selon l'une quelconque des revendications précédentes, **caractérisé en ce que** le dispositif (80) comprend un élément de contact (36 ; 38 ; 82) formé pour la connexion d'au moins l'un desdits conducteurs (1 ; 28) à la première (3) ou à la deuxième (5) unité, dans lequel l'élément de contact (36 ; 38 ; 82) comprend un indicateur de connexion (90) agencé pour émettre un signal lors de l'établissement d'une connexion entre les unités (3, 5) par l'intermédiaire du conducteur (1 ; 28).

14. Dispositif (80) selon l'une quelconque des revendications précédentes, **caractérisé en ce que** le dispositif (80) comprend au moins un conducteur de fluide destiné à conduire un gaz sous pression et au moins un capteur de pression agencé pour détecter une pression de gaz, et **en ce que** le dispositif (80) est agencé pour émettre un signal d'avertissement lors de la détection d'une fuite de gaz à partir du conducteur de fluide.

15. Utilisation du dispositif (80) selon la revendication 1, **caractérisée en ce que** le dispositif (80) est utilisé pour maintenir ensemble les conducteurs (1 ; 28) entre une première (3) et une deuxième (5) unité.

16. Utilisation selon la revendication 15, **caractérisée en ce que** lesdites première et deuxième unités (3, 5) sont des unités de véhicule.
